# FASCICULE DE BREVET EUROPEEN

(11) **EP 1 558 684 B1**
(45) Date de publication et mention de la délivrance du brevet: **03.01.2007**
(21) Numéro de dépôt: 03775462.9
(22) Date de dépôt: 02.10.2003
(51) Int. Cl.: C09C 1/64, C09D 7/12, C09D 5/36

(54) **COMPOSITIONS PIGMENTAIRES DE PARTICULES D'ALUMINIUM METALLIQUE**
PIGMENTZUSAMMENSETZUNGEN MIT METALLISCHEN ALUMINIUMPARTIKELN
PIGMENT COMPOSITIONS COMPRISING ALUMINIUM METAL PARTICLES

(30) Priorité: 03.10.2002 FR 0212273
(43) Date de publication de la demande: 03.08.2005
(73) Titulaire: CENTRE NATIONAL DE LA RECHERCHE SCIENTIFIQUE (CNRS), 75016 Paris (FR); Toyal Europe S.A., 64490 Bedous (FR); Université de Bordeaux I, 33608 Pessac (FR)
(72) Inventeur: DUGUET, Etienne, F-33130 Begles (FR); MORVAN, Fabrice, F-64400 Oloron Ste Marie (FR); LELIEVRE, Hervé, F-64290 Estialescq (FR)
(74) Mandataire: Colombet, Alain André
(86) Numéro de dépôt international: PCT/FR2003/002897
(87) Numéro de publication internationale: WO 2004/031304

(56) Documents cités:
- EP-A- 0 599 279
- US-A- 5 750 197
- US-A- 5 759 629
- US-A- 6 132 808
- US-B1- 6 261 638
- US-B1- 6 287 695
- VAN OOIJ W.J., SONG J.; S: "Silane-based pretreatments of aluminium and its alloys as chromate alternatives" ATB METALLURGIE, vol. 37, no. 2-3-4, pages 137-142, XP009010991

## Description

La présente invention a trait à des compositions pigmentaires à base de particules d'aluminium métallique, destinées en particulier à la formulation de peintures dites "métallisées", et notamment de peintures à base aqueuse, utiles notamment dans le cadre de l'industrie automobile.

En règle générale, les compositions pigmentaires à base de particules d'aluminium métallique actuellement connues sont obtenues par des procédés dits "par broyage humide", qui consistent à introduire dans un dispositif de type broyeur à billes (1) de l'aluminium (le plus souvent sous la forme de poudre, cette poudre étant généralement obtenue par atomisation, c'est-à-dire par refroidissement d'aluminium liquide, pulvérisé, dans un flux d'air ou de gaz inerte) ; (2) un acide gras (par exemple de l'acide oléique ou de l'acide stéarique) ; et (3) un solvant aliphatique ou un mélange de solvants aliphatiques (le plus souvent un mélange de type white-spirit).

Suite à cette déformation plastique en présence d'acide gras et de solvant(s), on obtient une pâte comprenant l'aluminium sous la forme de paillettes (dits "lamellar pigments" ou "flakes" en anglais), à la surface desquelles sont adsorbées des molécules d'acides gras. Il semble pouvoir être avancé que, dans le cadre de ce procédé, la mise en oeuvre conjointe des acides gras et des solvants permet à la fois d'éviter le soudage à froid des particules d'aluminium lors de leur déformation plastique et de protéger les particules, de façon momentanée, vis-à-vis de l'oxydation, notamment par l'air ambiant et/ou par l'humidité.

Un exemple typique de procédé par "broyage humide" est décrit dans le brevet US 2,002,891. Ce procédé, connu sous le nom de "procédé Hall" est actuellement le procédé industriel le plus usuel pour obtenir des compositions pigmentaires d'aluminium sous la forme de paillettes. Au cours des années, on a mis au point les différents paramètres à adapter pour obtenir différents grades de pigments, de forme, de taille et de propriétés données. Ainsi, on a par exemple étudié l'influence de la granulométrie initiale de la poudre d'aluminium, du temps et de la vitesse de broyage, du diamètre des billes ou du type de broyeur mis en oeuvre. Pour plus de détails à ce sujet, on pourra notamment se reporter aux brevets US 3,901,688 , US 3,970,577, US 3,901,688 US 4,236,934 ou US 4,693,754 , ou à la demande EP 305 158.

De façon plus générale, le procédé "Hall" et les procédés analogues apparaissent aujourd'hui comme des procédés industriels relativement aisés de mise en oeuvre, dans la mesure où leurs conditions opératoires optimales sont maintenant bien établies, à la fois en termes d'efficacité et de sécurité. Ces procédés permettent en outre d'obtenir de façon simple, efficace et relativement peu coûteuse des pigments aluminium à propriétés ciblées.

Toutefois, malgré ces différents avantages, il s'avère que les applications potentielles des pigments d'aluminium métalliques obtenus par les procédés de type "Hall" sont limitées à une mise en oeuvre au sein de compositions à base de solvants organiques, et essentiellement au sein de compositions de peintures à base de solvants organiques. En effet, en présence d'eau, ces pigments se corrodent rapidement, ce qui se traduit généralement par une perte au moins partielle de leur éclat métallique (notamment par formation, à leur surface, d'une couche d'oxyde d'épaisseur importante), et surtout par un dégagement d'hydrogène non négligeable, qui peut notamment induire des problèmes en termes de sécurité (inflammabilité, voire explosivité ; surpression au niveau des fûts de stockage, etc...).

Or, à l'heure actuelle, compte tenu de l'évolution de la législation visant à réduire la mise en oeuvre de solvants organiques, on cherche justement à développer, dans le domaine des peintures, métallisées, ou non, des compositions à base d'eau (formulations aqueuses, dites *"waterborne"*). Les pigments du type de ceux obtenus selon le procédé « Hall » se montrent clairement inadaptés dans ce type de formulations aqueuses.

Par conséquent, au cours des dernières années, on s'est efforcé de modifier les pigments obtenus selon le procédé « Hall », de façon à les rendre adaptés à une mise en oeuvre en milieu aqueux.

Jusqu'à présent, les tentatives réalisées dans ce cadre ont essentiellement consisté à effectuer une modification de surface des particules obtenues à l'issue des procédés de type "Hall", cette modification consistant à remplacer les molécules d'acides gras adsorbées par des espèces inhibitrices de corrosion, telles que des esters phosphoriques, des phosphates, des phosphonates, des vanadates, des chromates, des molybdates, ou bien encore des sels de terres rares, ou des acides dimères. La désorption des molécules d'acides gras et l'adsorption des espèces inhibitrices nécessaires dans ce processus induisent en général des étapes lourdes, qui doivent notamment être conduites à l'abri de l'oxygène et de l'humidité, en particulier pour éviter au maximum une oxydation des paillettes d'aluminium au cours de ces étapes. Une autre voie a consisté à essayer de réaliser l'encapsulation dans une coque de polymère ou de silice, ce qui nécessite un contrôle rigoureux des conditions expérimentales, notamment pour éviter les phénomènes d'agglomération et pour conserver la morphologie de la particule de départ.

Dans tous les cas, les procédés développés se sont donc révélés onéreux et, en général, difficilement exploitables au niveau industriel. En outre, les compositions pigmentaires d'aluminium métallique obtenues selon ces procédés se montrent en général décevantes en termes de résistance à la corrosion. Enfin, leurs propriétés optiques sont le plus souvent médiocres en comparaison de celles des compositions pigmentaires directement obtenues à l'issu des procédés de type "Hall". On impute généralement ce phénomène à l'épaisseur relativement importante de la couche d'oxyde de surface, le plus souvent largement supérieure à 6 nm (généralement au moins de l'ordre de 7 à 10 nm).

Or, de façon tout à fait inattendue, les inventeurs ont maintenant découvert qu'il est possible de mettre en oeuvre dans un processus de déformation plastique du type du "broyage " du procédé "Hall" usuel, non pas des acides gras, mais des composés particuliers, de type silane, ce qui conduit à la formation de compositions pigmentaires d'aluminium présentant des propriétés optiques au moins comparables à celles des compositions obtenues selon les procédés de type "Hall", et qui présentent en outre une très bonne résistance à la corrosion, en particulier vis-à-vis de l'eau.

Les travaux des inventeurs ont de plus permis de mettre en évidence que les compositions pigmentaires obtenues dans ce cadre sont, de façon surprenante, aussi bien adaptées à des formulations aqueuses qu'à des formulations à base de solvants organiques.

En outre, les inventeurs ont également découvert que, de façon surprenante, les conditions à mettre en oeuvre lors d'un broyage avec les composés de type silane peuvent être calquées sur les conditions établies pour les procédés de type "Hall" usuels.

Sur la base de ces découvertes, un des buts de l'invention est de fournir des compositions pigmentaires présentant des propriétés optiques au moins comparables à celles des compositions pigmentaires obtenues selon les procédés usuels de type "Hall", mais possédant une résistance à la corrosion accrue. Dans ce cadre, l'invention a en particulier pour but de fournir des compositions pigmentaires d'aluminium métallique, notamment utilisables en milieu aqueux, dans lesquelles les particules d'aluminium présentent une stabilité importante vis-à-vis de l'oxydation et de la corrosion.

Un autre but de l'invention est de fournir des compositions pigmentaires d'aluminium métallique susceptibles de pouvoir être mises en oeuvre aussi bien en milieu aqueux qu'en milieu solvant organique.

De façon plus générale, l'invention a également pour but de fournir un procédé simple, efficace et peu onéreux permettant de préparer des particules d'aluminium métallique stabilisées vis-à-vis de l'oxydation et de la corrosion par l'eau et l'air.

Ainsi, selon un premier aspect, la présente invention a pour objet une composition pigmentaire comprenant des particules (p) à base d'aluminium métallique, lesdites particules (p) ayant une couche d'oxydation de surface d'épaisseur moyenne au plus égale à 5 nm, et lesdites particules (p) étant recouvertes par une couche protectrice comprenant des chaînes hydrocarbonées R liées à la surface des particules (p) par l'intermédiaire de liaisons [particule]-Al-O-Si-R.

Par "particules à base d'aluminium métallique", on entend, au sens de la présente invention, des particules comprenant de l'aluminium à l'état métallique. Dans ces particules, la quantité totale d'aluminium élémentaire présent représente de préférence au moins 50% en masse, avantageusement au moins 70% en masse, et encore plus préférentiellement au moins 90% en masse par rapport à la quantité d'éléments métalliques présents dans lesdites particules. Par ailleurs, dans des particules à base d'aluminium métallique selon l'invention, on préfère le plus souvent que la quantité d'aluminium à l'état métallique représente au moins 90% de la quantité totale d'aluminium (avantageusement au moins 95%, et encore plus préférentiellement au moins 98%, et de façon particulièrement avantageuse, au moins 99%, voire au moins 99,5%). De façon particulièrement préférée, les particules mises en oeuvre dans l'invention sont des particules essentiellement à base d'aluminium métallique, c'est-à-dire des particules constituées à au moins 99,5% en masse (de préférence au moins 99,7% en masse, et encore plus préférentiellement au moins 99,9% en masse) d'aluminium à l'état métallique.

En règle générale, les particules (p) présentes dans les compositions de l'invention sont des particules anisotropes de dimensions moyennes inférieures ou égales à 500 microns, de préférence inférieures à 400 microns et avantageusement inférieures à 300 microns.

Ainsi, le plus souvent, les particules (p) sont des particules de type paillettes, de diamètre transversal moyen inférieur ou égal à 500 microns, de préférence entre 1 et 400 microns, plus préférentiellement entre 2 et 250 microns et avantageusement entre 5 et 100 microns, et d'épaisseur moyenne inférieure ou égale à 3 microns, et préférentiellement comprise entre 0,1 et 2 microns. En général, le facteur de forme des particules (p) (rapport de l'épaisseur moyenne au diamètre transversal moyen) est compris entre 1/5 et 1/1000, et de préférence entre 1/10 et 1/100.

Par ailleurs, quelle que soit leur morphologie exacte, les particules (p) présentes dans les compositions pigmentaires de l'invention possèdent le plus souvent une surface spécifique comprise entre 0,5 et 100 m²/g, cette surface spécifique étant avantageusement comprise entre 1 et 10 m²/g, et de préférence de l'ordre de 5 m²/g.

De façon caractéristique, les particules (p) présentes dans les compositions de l'invention présentent une couche d'oxydation de surface d'épaisseur moyenne au plus égale à 5 nm, cette épaisseur de la couche d'oxydation de surface pouvant, dans certains cas, être inférieure à 4 nm.

L'épaisseur de la couche d'oxydation de surface à laquelle il est fait référence ici peut notamment être mesurée par spectroscopie d'électrons Auger, selon une méthode classique, qui consiste à établir la composition chimique à la surface des pigments étudiés, puis à effectuer un décapage ionique de la surface permettant d'accéder à des "couches" plus profondes, ce qui permet d'analyser les différentes de surface de proche en proche. L'établissement du profil de concentration des divers éléments chimiques (aluminium et oxygène dans le cas présent) en fonction de la profondeur permet d'évaluer l'épaisseur de la couche d'oxyde. Cette technique, mise en oeuvre usuellement par les opérateurs d'appareillages de spectroscopie d'électrons Auger, permet en général d'obtenir une précision de l'ordre du nanomètre pour la mesure de l'épaisseur de la couche d'oxydation de surface.

Sans vouloir être lié en aucune façon à une théorie particulière, il semble pouvoir être avancé que la faible épaisseur de couche d'oxydation des particules (p) se traduit par de bonnes qualités optiques pour les compositions pigmentaires de l'invention, notamment en ce qui concerne la brillance et l'éclat métallique. En tout état de cause, les compositions pigmentaires de l'invention présentent en règle générale des caractéristiques de brillance au moins similaires à celles des compositions commerciales usuelles obtenues selon le procédé "Hall".

Une caractéristique essentielle des particules (p) présentes au sein des compositions de l'invention est la présence spécifique à leur surface d'une couche protectrice comprenant des chaînes hydrocarbonées R.

Par le terme de "couche protectrice", on entend, au sens de la présente description, une couche organique recouvrant totalement les particules (p), et assurant une protection de l'aluminium métallique vis-à-vis de la corrosion et/ou de l'oxydation et de préférence à la fois vis-à-vis de la corrosion et de l'oxydation.

Cette couche protectrice est, de façon caractéristique, constituée en tout ou partie par des chaînes hydrocarbonées R liées à la surface des particules (p) par l'intermédiaire de liaisons [particule]-Al-O-Si-R. La couche protectrice des particules (p) peut comprendre, dans certains cas particuliers, des chaînes organiques liées de façon non covalente aux particules, notamment des chaînes complexées à la surface des particules ou liées à leur surface par liaison ionique ou encore par liaison hydrogène. Dans certains cas particuliers, la couche protectrice peut également comprendre des éléments de nature non organique. Toutefois, le plus souvent, les chaînes liées de façon covalente aux particules (p) sont majoritaires au sein de la couche.

Ainsi, en règle générale, la quantité moyenne de chaînes hydrocarbonées R liées à la surface des particules (p) par l'intermédiaire de liaisons [particule]-Al-O-Si-R reste supérieure ou égale à 10 micromoles par m² de surface de pigments, cette quantité étant de préférence au moins égale à 12 micromoles par m², et avantageusement au moins égale à 14 micromoles par m² et de préférence de l'ordre de 16 micromoles par m²

Par ailleurs, le plus souvent, la couche protectrice des particules (p) ne contient absolument aucun acide gras. De façon plus générale, les compositions de l'invention sont, en règle générale, exemptes de la présence de tout acide gras, ou de sel d'acide gras.

De préférence, la couche protectrice est essentiellement constituée par des chaînes hydrocarbonées R, liées à la surface des particules (p) par l'intermédiaire des liaisons [particule]-Al-O-Si-R. Selon une variante particulièrement avantageuse, la couche protectrice peut prendre la forme d'une "coque" polymère formant un film protecteur continu autour des particules (p), ayant la structure schématique représentée sur la figure 1 ci-dessous :

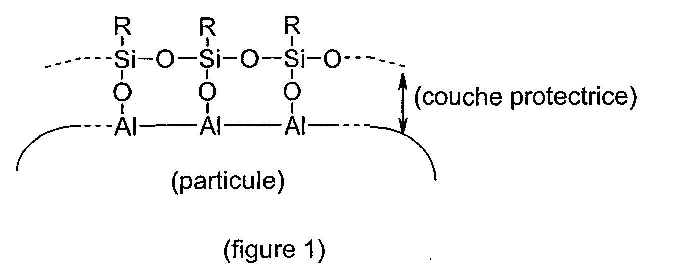

Les chaînes hydrocarbonées R constitutives de la couche protectrice, qui sont liées à la surface des particules (p) par l'intermédiaire de liaisons [particule]-Al-O-Si-R sont de préférence choisies parmi :
- les chaînes alkyles, linéaires ou non linéaires, comportant de 1 à 30 atomes de carbone, et avantageusement entre 8 et 18 atomes de carbone. Dans ce cadre, sont particulièrement adaptées selon l'invention, notamment les chaînes méthyle, éthyle, propyle, isopropyle, butyle, pentyle, hexyle, heptyle, octyle, décyle, dodécyle, hexadécyle, octadécyle, cosyle, heptacosyle, triaconyle, les chaînes octadécyle, octyle, décyle, dodécyle, hexadécyle étant plus particulièrement préférées ;
- les chaînes alkyles, linéaires ou non linéaires, totalement ou partiellement fluorées, éventuellement hydroxylées, et comportant de 1 à 30 atomes de carbone et de préférence entre 8 et 18 atomes de carbone. Dans ce cadre, sont particulièrement préférées les chaînes comportant (ou constituées par) des groupements fluorométhyle, trifluorométhyle, trifluoropropyle, heptadécafluorotétrahydrodécyle, heptafluoroisopropoxy- propyle, et tridécafluorotétrahydrooctyle ;
- les chaînes alcényle ou alcynyle, linéaires ou non linéaires, comportant de 1 à 30 atomes de carbone, et de préférence entre 8 et 18 atomes de carbone, et de préférence les chaînes comportant des groupements vinyle, allyle, hexényle, octényle, undécényle, et dococényle ;
- les chaînes hydrocarbonées cycliques, de préférence aromatiques, éventuellement halogénées, comportant entre 6 et 30 atomes de carbone, telles que les groupements benzyle, phényle, phénétyle, styryle, tolyle, bromobenzyle, chlorobenzyle, fluorophényle, chlorophényle, ou iodophényle ;
- les chaînes hydrocarbonées linéaires ou non linéaires, comportant de 1 à 30 atomes de carbone (de préférence entre 8 et 18 atomes de carbone), et substituées par au moins une fonction amine, et notamment les groupements aminopropyle, aminobutyle, aminophényle, aminoéthylaminopropyle, diéthylènetriaminepropyle ;
- les chaînes hydrocarbonées comportant de 3 à 30 atomes de carbone et comprenant des groupements polymérisables, telles que des chaînes époxyhexyle, époxypropoxypropyle, méthacryloxyméthyle ou méthacryloxypropyle.

Compte tenu de la très bonne stabilité des particules (p) vis-à-vis de l'oxydation et de la corrosion, les compositions de l'invention peuvent en général se présenter sous des formes diverses.

Ainsi, les compositions selon l'invention peuvent par exemple se présenter sous la forme de poudre comprenant les particules (p) à l'état sec, cette poudre étant redispersable dans l'eau, ou bien dans un solvant organique (solvants polaires ou apolaires, tels que des mélanges d'hydrocarbures, des glycols, ou bien encore des alcools) ou bien au sein d'une matrice polymère (notamment dans une matrice à base de polystyrène, polychlorure de vinyle, polyuréthane, polyester, polyalkyde, ou d'un polymère polyacrylique ou polyméthacrylique).

Il est surtout à souligner que les compositions pigmentaires de l'invention peuvent se présenter sous la forme de dispersions comprenant les particules (p) au sein d'un milieu aqueux. Les compositions de l'invention peuvent également avoir la forme de dispersions comprenant les particules (p) au sein d'un milieu solvant (solvant polaire ou apolaire, notamment mélanges d'hydrocarbures, glycols ou alcools). Lorsque les compositions de l'invention se présentent sous la forme de dispersions en milieu aqueux ou en milieu solvant, leur concentration en particules (p) peut en général varier entre 25 et 90% en masse, et cette concentration est de préférence comprise entre 50 et 75% en masse.

Selon un autre aspect, la présente invention concerne également un procédé de préparation des composition pigmentaires qui viennent d'être définies.

Ce procédé est caractérisé en ce que qu'il comprend une étape (E), consistant à déformer sous contrainte mécanique des particules (p₀) à base d'aluminium métallique, en présence des composés suivants :
(i) des silanes répondant à la formule (I) suivante : 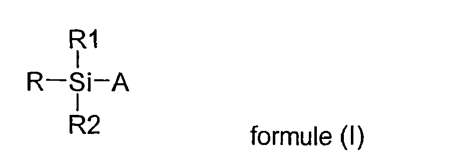 dans laquelle :
   - R représente une chaîne hydrocarbonée telle que définie précédemment ;
   - A désigne un groupement hydrolysable ; et
   - R1 et R2, identiques ou différents, représentent chacun :
      - un groupe hydrolysable, identique ou non au groupement A (de préférence identique au groupement A, le cas échéant) ;
      - une chaîne hydrocarbonée, identique ou non à la chaîne R (de préférence identique à la chaîne R, le cas échéant);
      - un groupement de formule (II) : 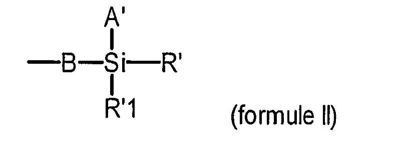 dans laquelle :
         - B est une chaîne hydrocarbonée, éventuellement interrompue par des atomes d'oxygène, et possédant en général entre 1 et 10 atomes de carbone, cette chaîne étant de préférence une chaîne poly(oxyde de propylène) ou une chaîne nonyle, heptyle, octyle, hexyle, pentyle, butyle, propyle, éthyle ou méthyle ;
         - A' a l'une des significations données ci-dessus pour A;
         - R' a l'une des significations données ci-dessus pour R;
         - R'1 désigne un groupe hydrolysable, identique ou non au groupement A' (et de préférence identique au groupement A', le cas échéant), ou bien une chaîne hydrocarbonée, identique ou non au groupement R' (et de préférence identique au groupement R', le cas échéant) ;
(ii) de l'eau, au moins à l'état de traces, cette eau étant généralement apportée par l'eau adsorbée de façon naturelle à la surface des particules d'aluminium (p₀), et ;
(iii) un solvant organique.

La déformation sous contrainte mécanique mise en oeuvre dans l'étape (E) vise à réaliser une déformation des particules (p₀).

Avantageusement, cette déformation sous contrainte mécanique des particules (p₀) est réalisée au sein d'un broyeur, généralement au sein d'un broyeur à billes, en présence des composés (i), (ii) et éventuellement (iii).

Comme on l'a souligné, les inventeurs ont mis en évidence que les conditions à mettre en oeuvre dans l'étape (E) du procédé de l'invention peuvent être calquées sur les conditions classiques de mise en oeuvre du procédé "Hall", en remplaçant l'acide gras généralement utilisé par un composé de formule (1). Ainsi, les conditions de mise en oeuvre de l'étape (E) pourront notamment être celles décrites dans les brevets US 3,901,688 , US 3,970,577 , US 3,901,688 , US 4,236,934 , US 4,693,754 ou dans la demande EP 305 158.

Suivant une variante particulière, qui peut se révéler avantageuse, l'étape (E) du procédé de l'invention peut comporter une étape préliminaire consistant à soumettre les particules (p₀), en suspension dans le solvant (iii), à une déformation sous contrainte mécanique (en général dans un broyeur à billes), cette étape étant suivie d'une deuxième étape consistant à poursuivre la déformation des particules (p₀) sous contrainte mécanique, en présence de l'ensemble des constituants (i), (ii) et (iii). Alternativement, l'étape (E) du procédé de l'invention peut aussi être réalisée en introduisant simultanément l'ensemble des divers constituants (i), (ii) et (iii) dès le début du processus de déformation sous contrainte mécanique.

Sans vouloir être lié à une théorie particulière, il semble pouvoir être avancé que, si les conditions de mise en oeuvre de l'étape (E) sont globalement similaires à celles du procédé "Hall", les mécanismes mis en jeu lors de la déformation mécanique semblent quant à eux extrêmement différents. Ainsi, dans le procédé de l'invention, les composés de formule (1) semblent jouer un rôle de lubrifiant analogue aux acides gras du procédé "Hall", mais il se produit à la surface des particules d'aluminium une réelle réaction chimique, et non un simple phénomène d'adsorption comme dans le cas du procédé "Hall". Sur la base de ces éléments, le procédé de l'invention peut être défini comme un processus mécanochimique induisant simultanément (1) une déformation de la poudre d'aluminium, et (2) une réaction de formation de liaisons covalentes AI-O-Si-R à la surface des particules en cours de déformation.

Les particules (p₀) mises en oeuvre dans l'étape (E) sont des particules à base d'aluminium métallique comprenant de préférence au moins 99% en masse, avantageusement au moins 99,5% en masse (et plus préférentiellement au moins 99,7%, voire 99,9% en masse) d'aluminium métallique. Ces particules (p₀) présentent avantageusement une taille moyenne initiale comprise entre 0,1 et 100 µm, cette taille moyenne des particules (p₀) initiales étant avantageusement au moins égale à 1 µm et de préférence au moins égale à 3 µm, étant entendu qu'il est préférable que cette granulométrie initiale reste inférieure à 50 µm et de préférence inférieure à 30 µm. En ce qui concerne les dimensions moyennes initiales des particules (p₀), on définit en général une taille limite dite "d₅₀" qui est telle que 50% des particules de la population des particules (p₀) présentent une taille inférieure à cette taille limite d₅₀. On peut définir de même deux autres tailles limites de référence, dites respectivement "d₁₀" et "d₉₀", qui désignent les tailles limites telles que 10% (respectivement 90%) des particules de la population des particules (p₀) présentent une taille inférieure à cette taille limite d₁₀ (respectivement d₉₀).

Les particules (p₀) qui sont mises en oeuvre dans l'étape (E) sont avantageusement des particules d'aluminium métallique pulvérulent obtenues par atomisation, c'est-à-dire par refroidissement d'aluminium liquide pulvérisé, par exemple dans un flux de gaz inerte ou dans un flux d'air. Ainsi, les particules (p₀) peuvent notamment être des particules du type de celles commercialisées par les sociétés Toyal Europe S.A., Toyal America Inc. et Toyo Aluminium K.K, sous la dénomination de "grade 406S", "grade 409S", ou "grade 432".

Selon une variante particulière de l'invention, les particules (p₀) peuvent être des particules qui ont été préalablement greffées par des chaînes organiques, notamment par des chaînes organiques du type des chaînes R présentes sur les silanes, ces particules greffées pouvant par exemple être obtenues par un traitement préalable des particules d'aluminium (notamment les grades "406S", "409S" ou "432" tels que précités) par un silane de formule (I), en présence de traces d'eau, l'eau adsorbée de façon naturelle à la surface des particules d'aluminium étant généralement suffisante dans ce cadre.

Les composés silaniques de formule (1) mis en oeuvre dans l'étape (E) du procédé de l'invention comportent, de façon caractéristique, au moins un groupement A hydrolysable.

Par "groupement hydrolysable", on entend, au sens de la présente description, un groupement capable de réagir en présence d'eau ou de traces d'eau pour former un groupement -OH. De préférence, dans les silanes de formule (I) mis en oeuvre dans l'étape (E), les groupes hydrolysables présents (à savoir le groupement A, et éventuellement, le groupement R1 et/ou le groupement R2 et/ou le groupement R1', le cas échéant) sont choisis parmi les groupements chloro (-Cl), alcoxyle (de préférence les groupements alcoxyle en C₁ à C₆), et aryloxyle (en général des groupements aryloxyle comportant de 6 à 12 atomes de carbone), ces groupements hydrolysables étant de préférence choisis parmi les groupements chloro, méthoxyle, éthoxyle, isopropoxyle, N-butoxyle, ou phénoxyle.

Dans le cas où un des groupements hydrolysables présents sur ie silane est un groupement chloro, il est à noter que l'hydrolyse entraîne un dégagement d'acide chlorhydrique qu'il est généralement nécessaire de piéger par ajout d'amine. Par conséquent, les fonctions de type alcoxyle et aryloxyle sont préférées. On préfère donc, en règle générale, que les groupements hydrolysables des composés de formule (I) soient des composés de type alcoxyle et aryloxyle.

En général, les silanes de formule (I) mis en oeuvre dans l'étape (E) du procédé de l'invention sont des silanes monofonctionnels, c'est-à-dire des silanes comportant une seule chaîne hydrocarbonée (à savoir le groupement R), et où les groupements R1 et R2 sont des groupements hydrolysables (en général des groupements alcoxyle ou aryloxyle). La mise en oeuvre de tels silanes permet en effet généralement d'obtenir, *in fine,* par homopolymérisation des groupements silane, des couches protectrices de type coque polymère autour des particules, telles que celles représentées schématiquement sur la figure 1.

Toutefois, il peut être intéressant que les silanes mis en oeuvre dans l'étape (E) possèdent deux ou trois chaînes hydrocarbonées, c'est-à-dire que le groupement R1 et/ou le groupement R2 représentent une chaîne hydrocarbonée telle que définie précédemment. Dans ce cas, il est toutefois préférable que les chaînes hydrocarbonées présentes soient des chaînes présentant un nombre relativement réduit d'atomes de carbone, à savoir de préférence moins de 10 atomes de carbone, et avantageusement moins de 5 atomes de carbone, ces chaînes étant de façon particulièrement préférée des groupements méthyle ou éthyle.

Lorsque l'un des groupements R1 ou R2 désigne un groupement silane hydrocarboné de formule (II), il est préférable que l'autre des groupements R2 ou R1 désigne un groupement hydrolysable, ou une chaîne hydrocarbonée, identique ou différente de ia chaîne R. Dans ia formule (ii), le groupement R1' désigne de préférence un groupement hydrolysable.

En règle générale, dans le procédé de l'invention, la quantité de silane de formule (1) mise en oeuvre dans l'étape (E) est de préférence au moins égale à 40 g par kg d'aluminium, cette quantité étant en général inférieure ou égale à 400 g par kg d'aluminium.

Le solvant (iii) mis en oeuvre dans l'étape (E) du procédé de l'invention est, en général, un solvant assurant la protection des particules contre l'humidité. Dans ce cadre, on préfère donc le plus souvent que le solvant (iii) soit un solvant hydrophobe, avantageusement apolaire. Par ailleurs, le solvant (iii) est en général choisi de façon à réaliser le broyage dans des conditions de sécurité optimale, et on préfère notamment dans ce cadre que ce solvant possède un point éclair le plus élevé possible. Il est par ailleurs avantageux, notamment pour limiter les pertes de solvant par évaporation (qui peuvent être sources d'incendie), que le solvant (iii) ait une volatilité la plus faible possible. On préfère de plus que ce solvant soit facilement éliminable à l'issue du procédé. Ainsi, le solvant (iii) peut avantageusement être choisi parmi les mélanges d'hydrocarbures, tels que les mélanges d'hydrocarbures aliphatiques, tels que les mélanges de type white spirit, et/ou parmi les mélanges d'hydrocarbures aromatiques, tels que le xylène.

Le plus souvent, quelle que soit sa nature, la quantité de solvant organique (iii), mise en oeuvre dans l'étape (E) est comprise entre 1 et 10 kg par kg d'aluminium, cette quantité étant de préférence supérieure ou égale à 2 kg par kg d'aluminium, et restant avantageusement inférieure ou égale à 8 kg par kg d'aluminium.

Par ailleurs, l'étape (E) du procédé de l'invention est généralement conduite à une température comprise entre 10 et 80°C, cette température étant de préférence au moins égale à 20°C et de préférence inférieure ou égale à 50°C. Il peut par ailleurs être avantageux de conduire l'étape (E) sous une atmosphère de gaz inerte (azote ou argon, par exemple). Toutefois, dans le cas général, l'utilisation d'un tel gaz inerte n'est pas indispensable.

Le plus souvent, le procédé de l'invention comprend, suite à l'étape (E), une étape de maturation, qui consiste le plus souvent à laisser le milieu au repos, pendant une durée généralement au moins égale à 24 heures, de préférence à une température supérieure ou égale à 20°C, et avantageusement à une température comprise entre 40 et 60°C. Selon une variante particulière, le procédé de l'invention peut comprendre, suite à l'étape (E) et à l'éventuelle étape de maturation supplémentaire, une étape additionnelle d'élimination du solvant, ce par quoi on obtient une composition sous la forme d'une poudre. Cette poudre peut ensuite être dispersée dans une phase solvant, aqueuse ou organique, ce par quoi on obtient une composition sous forme de dispersion, respectivement aqueuse ou organique.

Selon un autre mode de réalisation de la présente invention, les compositions pigmentaires définies précédemment peuvent également être obtenues selon un second procédé de préparation comprenant une étape similaire à l'étape (E) définie précédemment mais conduite en l'absence de solvant organique et sous atmosphère de gaz inerte (argon ou azote, par exemple).

Ce second procédé de préparation comprend ainsi, en général, une étape (E'), consistant à déformer, sous contrainte mécanique et sous une atmosphère de gaz inerte, des particules (p'₀) à base d'aluminium métallique, en présence des composés suivants :
(i') des silanes répondant à la formule générale (I) telle que définie précédemment, et
(ii') de l'eau, au moins à l'état de traces, cette eau étant en général apportée par l'eau adsorbée de façon naturelle à la surface des particules d'aluminium (p_{0'}).

En général cette étape (E') est une étape d'estampage à froid du type de celle mise en oeuvre dans le procédé connu sous le nom de procédé "Bessemer". Aussi, en général, l'étape (E') consiste à placer les particules du type (p'_{0'}) sur une enclume en acier et à déformer ces particules sous l'action de marteaux en présence des silanes (i').

Les particules (p'_{0'}) mises en oeuvre dans l'étape (E') peuvent être, dans le cas général, telles que définies précédemment pour les particules (p₀). On préfère ainsi que ces particules soient des particules à base d'aluminium métallique comprenant de préférence au moins 99,7% en masse, et plus préférentiellement 99,9% en masse d'aluminium métallique, ces particules présentant avantageusement une taille moyenne initiale comprise entre 0,1 et 100 microns.

Les silanes mis en oeuvre dans l'étape (E') peuvent être choisis parmi tout silane de formule (1) tel que mis en oeuvre dans l'étape (E) définie précédemment.

Par ailleurs, l'étape (E') du second procédé de l'invention est généralement conduite à une température comprise entre 10 et 80° C. Le gaz inerte mis en oeuvre dans cette étape peut notamment être l'azote, l'argon ou un mélange de ces deux gaz.

Quel que soit leur mode d'obtention, les compositions pigmentaires de l'invention peuvent être mises en oeuvre dans de nombreux domaines d'application, notamment compte tenu de leur résistance à la corrosion et à l'oxydation. En particulier, les compositions selon l'invention peuvent par exemple être utilisées pour la formulation de peintures métallisées, notamment pour des peintures métallisées utilisées dans le domaine de l'automobile, ou bien encore pour des peintures industrielles, ces peintures pouvant être des peintures à base aqueuse. Les compositions de l'invention peuvent également être utilisées pour formuler des encres d'impression à aspect métallisé, ou bien encore des matières plastiques à aspect métallisé. Ces différentes utilisations constituent un autre objet spécifique de la présente invention.

Les compositions de peintures métallisées comprenant une composition selon l'invention, et en particulier les compositions de peintures métallisées à base aqueuse, constituent également un objet particulier de la présente invention, ainsi que les encres d'impression à aspect métallisé et les matières plastiques à aspect métallisé intégrant des compositions pigmentaires selon l'invention.

Les caractéristiques et les différents avantages de l'invention apparaîtront encore plus nettement au vu des exemples illustratifs exposés ci-après.

### Exemple 1 : Préparation d'une composition pigmentaire selon l'invention

Dans un broyeur cylindrique horizontal muni de barres de chicane, de diamètre interne égal à 500 mm et de profondeur interne égale à 200 mm, on a introduit 32 kg de billes d'acier de diamètre égal à 2 mm. On a ensuite introduit dans ce broyeur 800 g de poudre d'aluminium (d₁₀ = 4 µm, d₅₀ = 11 µm et d₉₀ = 19 µm) obtenue par atomisation (aluminium commercialisé par la société Toyal Europe S.A.) et 2800 g de white spirit (Pétrosol 15A/15-20 commercialisé par CEPSA). On a soumis le mélange d'aluminium et de white spirit à 30 min de broyage à 24 tours par minute, à la suite de quoi on a ajouté dans le broyeur une dispersion de 80 g d'octadécyltriméthoxysilane dans 2700 g de white spirit. On a poursuivi le broyage à 24 tours par minute pendant 8 heures.

Il est à noter que la poudre d'aluminium utilisée dans cet exemple contient de façon naturelle des traces d'eau adsorbées à sa surface, ce qui suffit à permettre l'hydrolyse des molécules de silane introduites.

A l'issue du broyage, on a obtenu une boue qui a été soumise à un tamisage sur un tamis de 38 microns, puis sur un tamis de 25 microns. On a ensuite soumis la pâte ainsi tamisée à une filtration sous vide de façon à obtenir une pâte pigmentaire dont le taux de matière non-volatile a été porté à 65% par malaxage de la pâte pigmentaire en présence de la quantité nécessaire de white spirit.

La pâte obtenue a ensuite été soumise à une étape de maturation pendant 15 jours à une température de 50° C.

### Exemple 2 : Préparation d'une composition pigmentaire selon l'invention

Dans le broyeur de l'exemple 1, rempli de 32 kg de billes d'acier de diamètre égal à 2 mm, on a introduit 800 g de poudre d'aluminium telle que celle utilisée dans l'exemple 1 (d₁₀ = 4 µm, d₅₀ = 11 µm et d₉₀ = 19 µm), 2800 g de white spirit (Pétrosol 15A/15-20 commercialisé par CEPSA) et 4 g de 1,2-bis(triéthoxysilyl)éthane. On a soumis le mélange à 30 min de broyage à 24 tours par minute, à la suite de quoi on a ajouté dans le broyeur une dispersion de 80 g d'octadécyltriméthoxysilane dans 2700 g de white spirit. On a poursuivi le broyage à 24 tours par minute pendant 8 heures.

A l'issue du broyage, on a obtenu une boue qui a été soumise à un tamisage sur un tamis de 38 µm, puis sur un tamis de 25 µm. On a ensuite soumis la pâte tamisée deux fois à une filtration sous vide de façon à obtenir une pâte pigmentaire dont le taux de matière non-volatile a été porté à 65% par malaxage de la pâte pigmentaire en présence de la quantité nécessaire de white spirit.

La pâte a ensuite été soumise à une étape de maturation pendant 15 jours à une température de 50° C.

### Exemple 3 : Test de résistance à la corrosion en milieu aqueux

La pâte pigmentaire mature obtenue à l'issue de l'exemple 1 a été soumise à un test dit de « gassing », consistant à formuler les pigments dans un système de peinture en phase aqueuse (les pigments sont introduits à raison d'une concentration de 4% en aluminium métallique dans une composition de peinture aqueuse polyester de pH compris entre 7,8 et 8,2), puis à déterminer la quantité d'hydrogène produite par corrosion des pigments aluminium dans cette formulation. Le test de « gassing » réalisé a été effectué à 40°C.

A titre comparatif, on a effectué le même test de « gassing » sur la même masse de pigments classiques obtenus par broyage en présence d'acide oléique selon le procédé "Hall" dans des conditions identiques (poudre, broyeur, billes, température, vitesse de rotation...). Le volume d'hydrogène dégagé lors du test de « gassing » réalisé sur les pigments de l'invention ne dépasse pas 4 mL, même au bout de 50 heures, alors que, pour les pigments classiques, le volume d'hydrogène dégagé dépasse 6 mL au bout de 4 heures, ce volume étant supérieur à 20 mL au bout de 6 heures. Cet exemple illustre bien la résistance à la corrosion des compositions pigmentaires de l'invention, bien supérieure à celle des pigments "Hall".

### Exemple 4 : caractéristiques colorimétriques

Les deux pâtes pigmentaires testées dans l'exemple 3 ont également été analysées du point de vue de leurs caractéristiques colorimétriques sur un colorimètre X-Rite MA68, après formulation dans un système de peinture à base de solvant (à raison d'une concentration de 5% d'aluminium métallique dans une peinture de type polycarylique).

Les caractéristiques de la composition maturée de l'exemple 1 et de la composition de type "Hall" sont reportées dans le tableau 1 ci-dessous.

**TABLEAU 1 : caractéristiques colorimétriques d'une composition selon l'invention, comparée à une composition usuelle de type "Hall"**

| | Composition maturée de l'exemple 1 | Composition de type "Hall" |
|---|---|---|
| L* 15° | 137,09 | 139,82 |
| L* 25° | 108,68 | 108,18 |
| L* 45° | 64,48 | 62,27 |
| L* 75° | 38,87 | 37,95 |
| L* 110) | 32,77 | 32,71 |
| Indice de flop | 13,0 | 13,7 |

## Revendications

1. Composition pigmentaire comprenant des particules (p) à base d'aluminium métallique, lesdites particules (p) ayant une couche d'oxydation de surface d'épaisseur moyenne au plus égale à 5 nm, et lesdites particules (p) étant recouvertes par une couche protectrice comprenant des chaînes hydrocarbonées R liées à la surface des particules (p) par l'intermédiaire de liaisons [particule]-Al-O-Si-R.

2. Composition selon la revendication 1, **caractérisée en ce que** les particules (p) sont des particules anisotropes, de dimensions moyennes inférieures ou égales à 500 microns.

3. Composition selon la revendication 2, **caractérisée en ce que** les particules (p) sont des particules de type paillettes, de diamètre transversal moyen inférieur ou égal à 500 microns et d'épaisseur moyenne inférieure ou égale à 3 microns.

4. Composition selon la revendication 3, **caractérisée en ce que** le facteur de forme des particules (p) (rapport de l'épaisseur moyenne au diamètre transversal moyen) est compris entre 1/5 et 1/1000.

5. Composition selon l'une quelconque des revendications 1 à 3, **caractérisée en ce que** la surface spécifique des particules (p) est comprise entre 0,5 et 100 m²/g.

6. Composition selon l'une quelconque des revendications 1 à 4, **caractérisée en ce que** les chaînes hydrocarbonées R sont choisies parmi :
- les chaînes alkyles comportant de 1 à 30 atomes de carbone;
- les chaînes alkyles totalement ou partiellement fluorées, éventuellement hydroxylées, comportant de 1 à 30 atomes de carbone :
- les chaînes alcényle ou alcynyle comportant de 1 à 30 atomes de carbone ;
- les chaînas hydrocarbonées cycliques aromatiques, éventuellement halogénées, comportant entre 6 et 30 atomes de carbone ;
- les chaînes hydrocarbonées comportant de 1 à 30 atomes de carbone, substituées par au moins une fonction amine ;
- les chaînes hydrocarbonées comportant de 3 à 30 atomes de carbone et comprenant des groupements polymérisables.

7. Composition selon l'une quelconque des revendications 1 à 6, **caractérisée en ce que** la quantité moyenne de chaînes hydrocarbonées R liées à la surface des particules (p) est supérieure ou égale à 10 micromoles par m².

8. Composition selon l'une quelconque des revendications 1 à 7, **caractérisée en ce qu'**elle se présente sous le forme d'une poudre comprenant les particules (p) à l'état sec, ou bien d'une dispersion comprenant les particules (p) au sein d'un milieu aqueux, ou bien d'une dispersion comprenant les particules (p) au sein d'un milieu solvant.

9. Composition selon l'une quelconque des revendications 1 à 8 **caractérisée en ce qu'**elle est exempte de la présence de tout acide gras ou sel d'acide gras.

10. Procédé de préparation d'une composition selon l'une des revendications 1 à 9, **caractérisé en ce qu'**il comprend une étape (E), consistant à déformer sous contrainte mécanique des particules (p₀) à base d'aluminium métallique, en présence des composés suivants ;
(i) des silanes répondant à la formule (I) suivante : 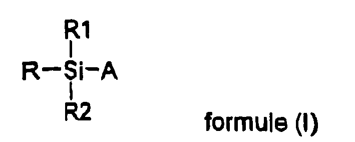 dans laquelle :
- R représente une chaîne hydrocarbonée telle que définie dans la revendication 1 ou dans la revendication 6 ;
- A désigne un groupement hydrolysable ; et
- R1 et R2, identiques ou différents, représentent chacun :
- un groupe hydrolysable, identique ou non au groupement A ;
- une chaîne hydrocarbonée, identique ou non à la chaîne R ; ou
- un groupement de formule (II) : 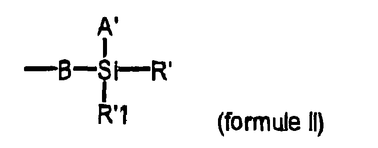 dans laquelle :
- B est une chaîne hydrocarbonée éventuellement interrompue par des atomes d'oxygène ;
- A' a l'une des significations données ci-dessus pour A;
- R' a l'une des significations données ci-dessus pour R ;
- R'1 désigne un groupe hydrolysable ou une chaîne hydrocarbonée ;
(ii) de l'eau, au moins à l'état de traces ; et éventuellement
(iii) un solvant organique.

11. Procédé selon la revendication 10, **caractérisé en ce que** l'étape (E) est conduite en réalisant une déformation sous contrainte mécanique des particules (p₀) au sein d'un broyeur, en présence des composés (i), (ii) et éventuellement (iii).

12. Procédé selon la revendication 10 ou selon la revendication 11, **caractérisé en ce que** les particules (p₀) mises en oeuvre dans l'étape (E) présentent une granulométrie initiale comprise entre 0,1 et 100 microns.

13. Procédé selon l'une quelconque des revendications 10 à 12, **caractérisé en ce que** les particules (p₀) qui sont mises en oeuvre dans l'étape (E) sont des particules qui ont été préalablement greffées par des chaînes organiques.

14. Procédé selon l'une quelconque des revendications 10 à 13, **caractérisé en ce que**, dans les silanes de formule (I) utilisés, les groupes hydrolysables sont choisis parmi les groupements chloro, alkyloxyle et aryloxyle.

15. Procédé selon l'une quelconque des revendications 10 à 14, **caractérisé en ce que** la quantité de silanes (I) mises en oeuvre dans l'étape (E) est supérieure ou égale à 40 g par kg d'aluminium.

16. Procédé selon l'une quelconque des revendications 10 à 15, **caractérisé en ce que** le solvant (iii) mis en oeuvre dans l'étape (E) est choisi parmi les mélanges d'hydrocarbures aliphatiques et/ou les mélanges d'hydrocarbures aromatiques.

17. Procédé selon l'une quelconque des revendications 10 à 16, **caractérisé en ce que** la quantité de solvant organique (iii) mise en oeuvre dans l'étape (E) est comprise entre 1 et 10 kg par kg d'aluminium.

18. Procédé selon l'une quelconque des revendications 11 à 17, **caractérisé en ce que** l'étape (E) est conduite à une température de 10 à 80°C.

19. Procédé selon l'une quelconque des revendications 11 à 18, **caractérisé en ce que** le procédé comprend, suite à l'étape (E), une étape de maturation, consistant à laisser le milieu au repos pendant au moins 24 heures à une température supérieure ou égale à 20°C.

20. Procédé selon l'une quelconque des revendications 11 à 19, **caractérisé en ce que** le procédé comprend, suite à l'étape (E) et à l'éventuelle étape de maturation, une étape d'élimination du solvant, ce par quoi on obtient une composition sous forme de poudre, qui peut être ensuite éventuellement dispersée dans une phase solvant, ce par quoi on obtient une composition sous forme de dispersion.

21. Procédé selon la revendication 10, **caractérisé en ce qu'**il comprend l'étape (E'), consistant à déformer, sous contrainte mécanique, des particules (p_{0'}) à base d'aluminium métallique sous atmosphère de gaz inerte, en présence des composés suivants :
(i') des silanes répondant à la formule générale (I) telle que définie dans la revendication 10 ; et
(il') de l'eau, au moins à l'état de traces.

22. Utilisation d'une composition selon l'une quelconque des revendications 1 à 9 ou d'une composition obtenue par un procédé selon l'une quelconque des revendications 10 à 21, pour la formulation d'une peinture métallisée, d'une encre d'impression ou de matière plastique à aspect métallisé.

23. Composition de peinture métallisée comprenant une composition selon l'une quelconque des revendications 1 à 9 ou une composition obtenue par un procédé selon l'une quelconque des revendications 10 à 21.

## Claims

1. Pigment composition which contains metallic aluminium-based particles (p), with the said particles (p) having a layer of surface oxidation of mean thickness which is at most equal to 5nm, and where the said particles are covered by a protective layer containing hydrocarbon chains R bonded to the surface of the particles (p) through [particle]-Al-O-Si-R bonds.

2. Composition as described in claim 1, **characterised by** the fact that the particles (p) are anisotropic particles with average dimensions of less than or equal to 500 microns.

3. Composition as described in claim 2, **characterised by** the fact that the particles (p) are flake-type particles whose average transverse diameter is less than or equal to 500 microns and whose mean thickness is less than or equal to 3 microns.

4. Composition as described in claim 3, **characterised by** the fact that the shape factor for the particles (p) (the ratio of the mean thickness to the mean transverse diameter) is between 1/5 and 1/1000.

5. Composition as described in any of claims 1 to 3 whatsoever, **characterised by** the fact that the specific surface area of the particles (p) is between 0.5 and 100 m2/g.

6. Composition as described in any of claims 1 to 4 whatsoever, **characterised by** the fact that the hydrocarbon chains R are chosen from:
- alkyl chains which contain 1 to 30 carbon atoms;
- alkyl chains which are totally or partly fluorinated, possibly hydroxylated, and which contain 1 to 30 carbon atoms;
- alkenyl or alkynyl chains which contain from 1 to 30 carbon atoms;
- aromatic cyclic hydrocarbon chains, possible halogenated, which contain from 6 to 30 carbon atoms;
- hydrocarbon chains which contain from 1 to 30 carbon atoms, substituted with at least one amine function;
- hydrocarbon chains which contain from 3 to 30 carbon atoms and which contain polymerisable groups;

7. Composition as described in any of claims 1 to 6 whatsoever, **characterised by** the fact that the average quantity of hydrocarbon chains R bonded to the surface of the particles (p) is greater than or equal to 10 micromoles per m².

8. Composition as described in any of claims 1 to 7, **characterised by** the fact that it is obtained in the form of a powder which contains particles (p) in the dry state, or a dispersion containing particles (p) in an aqueous medium, or a dispersion containing particles (p) in a solvent medium.

9. Composition as described in any of claims 1 to 8 whatsoever, **characterised by** the fact that it is free of all fatty acids or salts of fatty acids.

10. Process for the preparation of a composition as described in any of claims 1 to 9, **characterised by** the fact that it includes a step (E), which involves deforming the metallic aluminium-based particles (p₀) under mechanical stress in the presence of the following compounds;
(i) silanes which have the following formula (I): 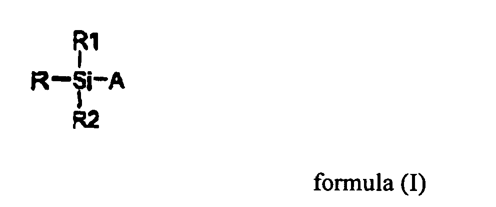 in which:
- R represents a hydrocarbon chain such as defined in claim 1 or in claim 6;
- A represents a hydrolysable group; and
- R1 and R2, which may be either identical or different, each represent:
- a hydrolysable group, which may or may not be identical to group A
- a hydrocarbon chain, which may or may not be identical to the chain R; or
- a group with the formula (II): 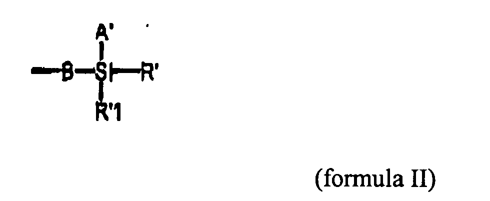 in which:
- B is a hydrocarbon chain which is possibly interrupted by oxygen atoms:
- A' has the same significance as given above for A;
- R' has one the same significance as given above for R;
- R'1 refers to a hydrolysable group or a hydrocarbon chain
(ii) water, at least at trace level; and possibly
(iii) an organic solvent.

11. Process as described in claim 10, **characterised by** the fact that the step (E) is performed by deforming the particles (p₀) under mechanical stress inside a crusher in the presence of compounds (i), (ii) and where appropriate (iii).

12. Process as described in claim 10 or as described in claim 11, **characterised by** the fact that the particles (p₀) used in step (E) have initial particle sizes of between 0.1 and 100 microns.

13. Process as described in any of claims 10 to 12 whatsoever, **characterised by** the fact that the particles (p₀) which are used in step (E) are particles which have had organic chains grafted beforehand.

14. Process as described in any of claims 10 to 13 whatsoever, **characterised by** the fact that in the silanes of formula (I) that are used, the hydrolysable groups are selected from chloro-, alkyloxyl and aryloxyl groups,

15. Process as described in any of claims 10 to 14 whatsoever, **characterised by** the fact that the average quantity of silanes (I) used in step (E) is greater than or equal to 40 g per kg of aluminium.

16. Process as described in any of claims 10 to 15 whatsoever, **characterised by** the fact that the solvent (iii) used in step (E) is selected from mixtures of aliphatic hydrocarbons and/or mixtures of aromatic hydrocarbons.

17. Process as described in any of claims 10 to 16 whatsoever, **characterised by** the fact that the quantity of organic solvent (iii) used in step (E) is between 1 and 10 kg per kg of aluminium.

18. Process as described in any of claims 11 to 17 whatsoever, **characterised by** the fact that the step (E) is carried out at a temperature between 10°C and 80°C.

19. Process as described in any of claims 11 to 18 whatsoever, **characterised by** the fact that after step (E) the process involves an ageing step which involves leaving the medium to stand for at least 24 hours at a temperature which is greater than or equal to 20°C.

20. Process as described in any of claims 11 to 19 whatsoever, **characterised by** the fact that following step (E), and where appropriate the maturation step, the process involves a solvent elimination step, by means of which a composition in powder form is obtained which may then be dispersed in a solvent phase, by means of which a composition in the form of a dispersion is obtained.

21. Process as described in claim 10, **characterised by** the fact that it includes a step (E') which involves deforming the metallic aluminium-based particles (p₀,) under mechanical stress in an atmosphere of inert gas and in the presence of the following compounds;
(i') silanes with the general formula (1) as defined in claim 10; and
(ii') water, at least at trace level.

22. The use of a composition as described in any of claims 1 to 9 whatsoever, or a composition obtained by a procedure as described in any of claims 10 to 21 whatsoever, for the formulation of metallised paint, of printing ink or plastic materials with a metallised finish.

23. Metallised paint composition made up of a composition as described in any of claims 1 to 9 whatsoever, or a composition obtained by a process as described in any of claims 10 to 21 whatsoever.

## Patentansprüche

1. Pigmentzusammensetzung, umfassend Partikel (p) auf der Basis von metallischem Aluminium, wobei die genannten Partikel (p) eine Oberflöchenoxidationsschicht einer mittleren Dicke von höchstens 5 nm aufweisen, und wobei die genannten Partikel (p) von einer Schutzschicht bedeckt sind, welche Kohlenwasserstoffketten R umfasst, die durch Bindungen [Partikel]-Al-O-Si-R an die Oberfläche der Partikel (p) gebunden sind.

2. Zusammensetzung nach Anspruch 1, **dadurch** charakterisiert, dass die Partikel (p) anisotrope Partikel sind, mit mittleren Dimensionen von weniger oder gleich 500 µm.

3. Zusammensetzung nach Anspruch 2, **dadurch** charakterisiert, dass die Partikel (p) Partikel vom Paillettentyp sind, mit einem mittleren Querdurchmesser von weniger oder gleich 500 µm und einer mittleren Dicke von weniger oder gleich 3 µm.

4. Zusammensetzung nach Anspruch 3, **dadurch** charakterisiert, dass der Formfaktor der Partikel (p) (Verhältnis der mittleren Dicke zum mittleren Querdurchmesser) zwischen 1/5 und 1/1000 liegt.

5. Zusammensetzung nach einem oder mehreren der Ansprüche 1 bis 3, **dadurch** charakterisiert, dass die spezifische Oberfläche der Partikel (p) zwischen 0,5 und 100 m²/g liegt.

6. Zusammensetzung nach einem oder mehreren der Ansprüche 1 bis 4, **dadurch** charakterisiert, dass die Kohlenwasserstoffketten R ausgewählt werden aus:
- Alkylketten, welche 1 bis 30 Kohlenstoffatome umfassen;
- vollständig oder teilweise fluorierten Alkylketten, gegebenenfalls hydroxyliert, welche 1 bis 30 Kohlenstoffatome umfassen;
- Alkenylketten oder Alkinylketten, welche 1 bis 30 Kohlenstoffatome umfassen;
- cyclischen aromatischen Kohlenwasserstoffketten, gegebenenfalls hydriert, welche 6 bis 30 Kohlenstoffatome umfassen;
- Kohlenwasserstoffketten, welche 1 bis 30 Kohlenstoffatome umfassen, welche durch mindestens eine Aminfunktion substituiert sind;
- Kohlenwasserstoffketten, welche 3 bis 30 Kohlenstoffatom umfassen und polymerisierbare Gruppen umfassen.

7. Zusammensetzung nach einem oder mehreren der Ansprüche 1 bis 6, **dadurch** charakterisiert, dass die mittlere Menge der Kohlenwasserstoffketten R, die an die Oberfläche der Partikel (p) gebunden sind, größer oder gleich 10 µmol pro m² ist.

8. Zusammensetzung nach einem oder mehreren der Ansprüche 1 bis 7, **dadurch** charakterisiert, dass sie in Form eines Pulvers vorliegt, umfassend die Partikel (p) in trockenem Zustand, oder in Form einer Dispersion, umfassend die Partikel (p) in einem wässrigen Medium, oder in Form einer Dispersion, umfassend die Partikel (p) in einem Lösungsmittel-Medium.

9. Zusammensetzung nach einem oder mehreren der Ansprüche 1 bis 8, **dadurch** charakterisiert, dass sie vollständig frei ist von Fettsäuren oder Fettsäuresalzen.

10. Verfahren zur Herstellung einer Zusammensetzung nach einem oder mehreren der Ansprüche 1 bis 9, **dadurch** charakterisiert, dass es einen Schritt (E) umfasst, der aus der Deformation von Partikeln (p₀) auf der Basis von metallischem Aluminium unter mechanischer Spannung besteht, in Gegenwart folgender Verbindungen:
(i) Silanen, die der folgenden Formel (I) entsprechen: 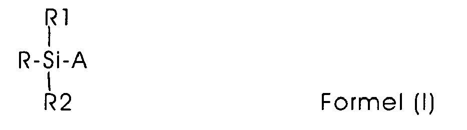 wobei:
- R eine Kohlenwasserstoffkette bedeutet, die wie in Anspruch 1 oder Anspruch 6 definiert ist;
- A eine hydrolysierbare Gruppe bedeutet; und
- R1 und R2, gleich oder verschieden, jeweils darstellen:
- eine hydrolysierbare Gruppe, mit der Gruppe A identisch oder nicht;
- eine Kohlenwasserstoffkette, identisch mit der Gruppe R oder nicht; oder
- eine Gruppe der Formel (II); 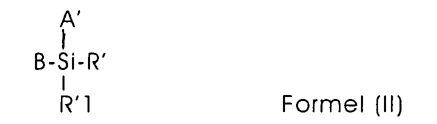 wobei
- B eine Kohlenwasserstoffkette ist, gegebenenfalls durch Sauerstoffatome unterbrochen;
- A' eine der oben für A angegebenen Bedeutungen hat;
- R' eine der oben für R angegebenen Bedeutungen hat;
- R'1 eine hydrolysierbare Gruppe oder eine Kohlenwasserstoffkette bezeichnet;
(ii) Wasser, mindestens in Form von Spuren; und gegebenenfalls
(iii) eines organischen Lösungsmittels.

11. Verfahren nach Anspruch 10, **dadurch** charakterisiert, dass der Schritt (E) durchgeführt wird, indem eine Deformation der Partikel (p₀) unter mechanischer Spannung in einem Brecher in Gegenwart der Verbindungen (i), (ii) und gegebenenfalls (iii) durchgeführt wird.

12. Verfahren nach Anspruch 1 0 oder nach Anspruch 1 1 , **dadurch** charakterisiert, dass die in Schritt (E) eingesetzten Partikel (p₀) eine Anfangsgranulometrie zwischen 0,1 und 100 µm zeigen.

13. Verfahren nach einem oder mehreren der Ansprüche 1 0 bis 1 2, **dadurch** charakterisiert, dass die in Schritt (E) eingesetzten Partikel (p₀) Partikel sind, die zuvor mit organischen Ketten gepfropft wurden.

14. Verfahren nach einem der Ansprüche 10 bis 13, **dadurch** charakterisiert, das in den verwendeten Silanen der Formel (I) die hydrolysierbaren Gruppen ausgewählt werden aus Chloro-, Alkyloxyl- und Aryloxylgruppen.

15. Verfahren nach einem oder mehreren der Ansprüche 10 bis 14, **dadurch** charakterisiert, dass die Menge der in Schritt (E) verwendeten Silane (I) größer oder gleich 40 kg pro kg Aluminium ist.

16. Verfahren nach einem oder mehreren der Ansprüche 1 0 bis 15, **dadurch** charakterisiert, dass das in Schritte (E) eingesetzte Lösungsmittel (iii) ausgewählt wird aus Mischungen von aliphatischen Kohlenwasserstoffen und/oder Mischungen von aromatischen Kohlenwasserstoffen.

17. Verfahren nach einem oder mehreren der Ansprüche 10 bis 16, **dadurch** charakterisiert, dass die Menge des in Schritt (E) eingesetzten Lösungsmittels (iii) zwischen 1 und 10 kg pro kg Aluminium liegt.

18. Verfahren nach einem oder mehreren der Ansprüche 11 bis 17, **dadurch** charakterisiert, dass Schritt (E) bei einer Temperatur von 1 0 bis 80 °C durchgeführt wird.

19. Verfahren nach einem oder mehreren der Ansprüche 11 bis 18, **dadurch** charakterisiert, dass das Verfahren im Anschluss an Schritt (E) einen Reifungsschritt umfasst, der darin besteht, dass das Medium mindestens während 24 Stunden bei einer Temperatur von 20 °C oder mehr stehen gelassen wird.

20. Verfahren nach einem oder mehreren der Ansprüche 11 bis 19, **dadurch** charakterisiert, dass das Verfahren im Anschluss an Schritt (E) und an den gegebenenfalls durchgeführten Reifungsschritt einen Schritt der Entfernung des Lösungsmittels umfasst, wodurch man eine Zusammensetzung in Pulverform erhält, die anschließend gegebenenfalls in einer Lösungsmittelphase dispergiert werden kann, oder wodurch man eine Zusammensetzung in Form einer Dispersion erhält.

21. Verfahren nach Anspruch 10, **dadurch** charakterisiert, dass es einen Schritt (E') umfasst, der in einer mechanischen Deformation von Partikeln (p₀) unter mechanischer Spannung auf der Basis von metallischem Aluminium in einer Inertgasatmosphäre in Gegenwart der folgenden Verbindungen besteht:
(i') Silanen, die der allgemeinen Formel (1) wie in Anspruch 10 definiert entsprechen; und
(ii') Wasser, mindestens in Form von Spuren.

22. Verwendung einer Zusammensetzung nach einem oder mehreren der Ansprüche 1 bis 9 oder einer nach einem Verfahren gemäß einem oder mehreren der Ansprüche 10 bis 21 erhaltenen Zusammensetzung zur Herstellung einer metallisierten Anstrichfarbe, einer Drucktinte oder von Kunststoffmaterial mit metallisiertem Aussehen.

23. Metallisierte Anstrichzusammensetzung, umfassend eine Zusammensetzung nach einem oder mehreren der Ansprüche 1 bis 9 oder eine nach einem oder mehreren der Ansprüche 1 0 bis 21 erhaltene Zusammensetzung.
